Europäisches Patentamt

European Patent Office

Office européen des brevets

(11) Publication number: **0 122 551**
**B1**

(12) # EUROPEAN PATENT SPECIFICATION

(45) Date of publication of patent specification: **27.12.89**

(51) Int. Cl.⁴: **G 01 M 3/00**

(21) Application number: **84103774.0**

(22) Date of filing: **05.04.84**

(54) **Apparatus for leakage testing the cooling circuit of cylinder heads of internal combustion engines.**

(30) Priority: **15.04.83 IT 4630983**

(43) Date of publication of application:
**24.10.84 Bulletin 84/43**

(45) Publication of the grant of the patent:
**27.12.89 Bulletin 89/52**

(84) Designated Contracting States:
**DE FR GB**

(56) References cited:
**EP-A-0 045 167**
**US-A-3 360 984**
**US-A-3 973 429**
**US-A-4 157 028**

(73) Proprietor: **Sbarzaglia, Giovanni**
**P.zza Martiri Spagnoli, 5**
**I-48018 Faenza (Ravenna) (IT)**

(72) Inventor: **Sbarzaglia, Giovanni**
**P.zza Martiri Spagnoli, 5**
**I-48018 Faenza (Ravenna) (IT)**

(74) Representative: **Modiano, Guido et al**
**MODIANO, JOSIF, PISANTY & STAUB Modiano**
**& Associati Via Meravigli, 16**
**I-20123 Milano (IT)**

Courier Press, Leamington Spa, England.

# Description

This invention relates to an apparatus for leak or leakage testing the cooling circuit of cylinder heads of internal combustion engines.

It is a known fact that engine cylinder heads may develop cracks which impair their cooling circuit tightness. It is current practice to test leaks by manually closing all of the ports in the cylinder head and introducing through the head cooling circuit water heated to a temperature in the 40°C to 80°C range, which is then pressurised by means of compressed air.

An apparatus for testing engine heads of this type is disclosed in the US—A—3 973 429. The known apparatus comprises a universal mounting frame which is rotatable about a longitudinal pivot axis to position the head at any orientation relative to the axis. The frame is provided with longitudinal rails on which spring loaded means and fluid supply and venting members are longitudinally adjustable in order to be aligned with the water ports of the head. After being aligned the stopper means are forced into seal engagement with the respective water ports.

A leak in the head would be notified by a pressure drop measured with suitable meters, as well as detected visually and acoustically by fluid seepage around a crack. This test is apparently a time-consuming and labour-consuming one owing to the need for sealing off one by one the many ports in the cylinder head and for shifting manually the cylinder head to inspect any leaky spots.

Thus, the task of this invention is to obviate that problem by providing an apparatus which affords the possibility of leakage testing the cooling circuit of cylinder heads of internal combustion engines in a quick and easy manner.

Within that task it is an object of the invention to provide such an apparatus which is simple in design, convenient and reliable to use, and versatile in application to different engine types.

These task and object are achieved, according to the invention, by an apparatus for leak testing cylinder heads of internal combustion engines, comprising a pivoting bench about a horizontal axis including means for holding a cylinder head to be tested, characterized in that means are mounted for oscillation on said pivoting bench and adapted to fasten to said cylinder head a cover plate sealing off top ports of the cylinder head cooling circuit, said plate being provided with fittings for admitting a pressurized test fluid through said cooling circuit, and means for fastening to said cylinder head small cover side plates sealing the side ports in said cooling circuit.

Further features of the invention will be apparent from the following detailed description of a preferred embodiment of this leak test apparatus, as illustrated in the accompanying exemplary drawings, where:

Figure 1 is a front view of this apparatus;

Figure 2 is a side view of this apparatus;

Figure 3 is a sectional view taken along the line III-III of Figure 2; and

Figure 4 is a plan view of the cover plate from the side thereof mating with the cylinder head.

With reference to the drawing figures, this apparatus for leak testing cylinder heads of internal combustion engines includes a base 1 having suitable drive members mounted therein, as explained hereinafter.

Mounted on the base 1 is a pivoting bench, generally indicated at 2, which comprises a pair of coaxial rims 3a, 3b to the interiors whereof a respective quadrilateral frame 4 is secured. Carried between two corresponding sides of the frame 4, and rigidly attached thereto, are two parallel stringers 5 for supporting a cylinder head to be tested and indicated at 6. The stringers extend outwards beyond the rim 3a, and one of the stringers 5 has an adjustable detent 7 mounted thereon.

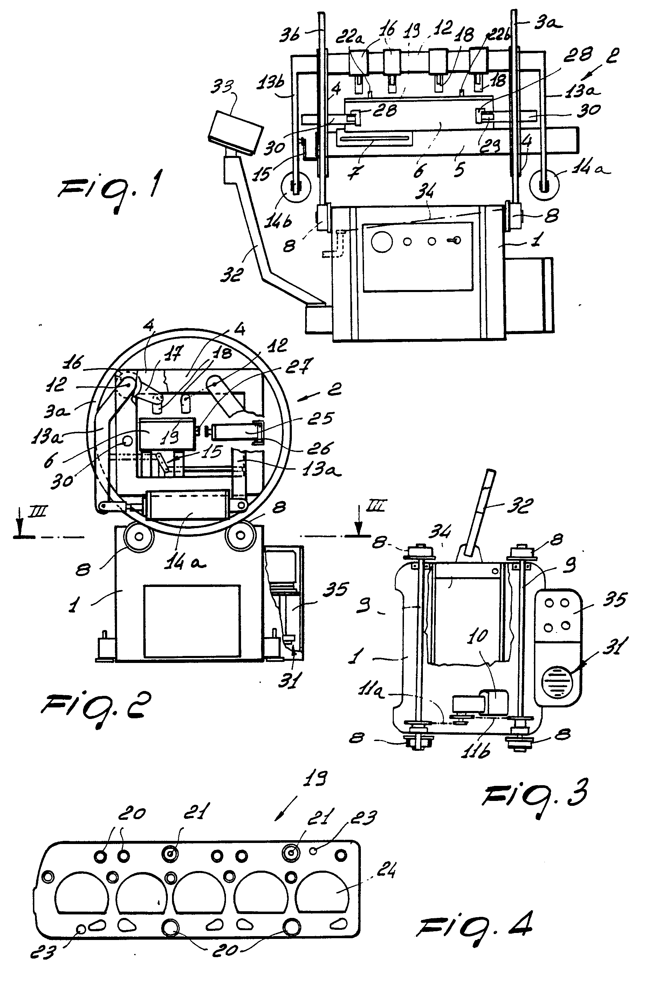

The rims 3a, 3b bear on respective roller pairs 8 which project frontally, on opposed sides, from the base 1. The rollers 8 are keyed (Figure 3) to two parallel shafts 9 which are journalled in the base 1 on a common horizontal plane. The shafts 9 are adapted to be driven simultaneously by the motor 10 through a chain drive 11a, 11b.

Carried rotatably between the frames 4 of the pivoting bench 2 are, on the remote side from the stringers 5, two shafts 12. The shafts 12 have attached to their ends, outside of the rims 3a, 3b, respective cross arms 13a, 13b. Pivotally connected to the free ends of the arms 13a and 13b are the bottom cap and piston rod, respectively, of a respective air cylinder 14a, 14b operative to produce their oscillation. The arms 13b are also connected to a linkage 15 which is pivoted to its respective frame 4 and effective to ensure that the arm angular displacements occur symmetrically.

A plurality of bushings 16 are mounted on the shafts 12 which are slidable along, but not rotatable around, the shafts. Projecting from each bushing 16 is a cross arm 17 having a pusher foot 18 articulated thereto. The feet 18 are adapted to act on a cover plate 19 for covering the upper ports in the head 6. As shown in detail in Figure 4, the cover plate 19 is formed on one face thereof, intended to contact the head 6, with a plurality of seats 20 for sealing gaskets corresponding to the ports of the cylinder head cooling circuit. Two threaded holes 21 are in communication with said cooling circuit, which are surrounded by respective sealing gaskets and adapted to receive quick-connection fittings 22a, 22b threadably therein, also provided, for accurately locating the plate on the head, are two throughgoing holes 23 for respective locating pins. The plate 19 is also formed with lightening cutouts 24.

For closing the cylinder head side ports, air cylinders 25 are provided on one side which are mounted, at an adjustable position, transversely to an additional longitudinal stringer 26 secured between the frames 4. The piston rods of the cylinders 25 are adapted to operate small plates or plugs 27 for application against the cylinder head. On the opposite side, a further pair of plates 28 are provided which are adapted to bear against respective detents 29 carried respectively on small shafts 30 which are mounted slidably on the frame 4, lengthwise to the pivoting bench 2.

The apparatus further including a test hydraulic fluid recirculating pump 31, accommodated in the base 1. A swinging arm 32 carrying a test control panel 33 is also articulated to the base 1.

The apparatus described hereinabove operates as follows.

The plate 19 covering the upper ports and side port cover plates 27 and 28 are attached to the cylinder head, being located thereon by means of suitable locating pins. Of course, said cover plates, a large one and small ones, are specifically constructed for different types of internal combustion engines.

The cylinder head 6 is then placed on the supporting stringers 5 of the pivoting bench 2 and pushed against the detent 7 in contact therewtih. Then, by sliding the respective supporting members, one positions the pressure feet 18 on the plate 19 and the pistons 25 and detents 29 at the respective plates 27 and 28. At this point, the cylinder head clamping is ordered by actuating the air cylinders 25 and then those 14a, 14b which effect rotation of the shafts 12. Thus, the cylinder head cooling circuit ports are sealed by the plate 19 and small plates 27 and 28 provided with suitable sealing gaskets; should the small plates 27 and 28 fail to cover all of the side ports, the closure should be effected by means of conventional manually threaded shutters. After clamping the head firmly, the compressed air system is connected, by means of a suitable cable equipped with quick-connect fittings, to the fitting 22a on the plate 19. By supplying the pressurized air into the cooling circuit, one can ascertain, both acoustically and by the pressure drop monitored by a pressure gauge on the control panel, the presence of possible cracks.

To locate the faults detected, after discharging the compressed air, one connects to the fitting 22b the test hydraulic fluid, usually water, delivery system, and a conventional overflow pipe to the fitting 22a so as to ascertain the filling of the cylinder head with fluid. After removing the overflow pipe and again connecting the compressed air to the fitting 22a, the water in the cooling circuit is pressurized.

To facilitate locating cracked spots whence water flows out, the bench 2 on which the cylinder head is clamped is turned. The discharge water is collected in an upper tank 34 of the base 1.

Thus, this apparatus enables the leak test to be carried out in a rapid manner, because the cooling circuit is closed automatically, and without effort even with large size and heavy cylinder heads, thanks to the pivoting bench on which the head is mounted.

Clamping of the cylinder head on the pivoting bench provides, moreover, safety for the operator.

The cylinder head may also be hot tested: the test may be, in fact, carried out after, by means of the pump 31, heated water has been circulated, which would be heated in an insulated tank 35 served by the same pump and an electric resistance heater, at desired temperature.

It should also be noted that it is possible to effect on the cylinder head, as mounted on the bench, the preliminary operations to grinding which are normally carried out in a difficult manner.

In practicing the invention, the materials, shape and dimensions may be any ones depending on requirements.

## Claims

1. An apparatus for leakage testing the cooling circuit of cylinder heads (C) of internal combustion engines, comprising a pivoting bench (2) about a horizontal axis including means (5) for holding a cylinder head (6) to be tested, characterized in that means are mounted for oscillation on said pivoting bench (2) and adapted to fasten to said cylinder head (6) a cover plate (19) sealing off top ports of the cylinder head cooling circuit, said plate (19) being provided with fittings (22a, 22b) for admitting a pressurized test fluid through said cooling circuit, and means for fastening to said cylinder head (6) small cover side plates (27, 28) sealing the side ports in said cooling circuit.

2. An apparatus according to Claim 1, characterized in that said pivoting bench (2) comprises a pair of coaxial rims (3a, 3b) carrying internally respective frames (4) wherebetween parallel stringers (5) are attached at the bottom for supporting said cylinder head (6) and a pair of shafts (12) are carried rotatably at the top having oscillating means (16) for clamping said cover plate mounted thereon, said shafts (12) being adapted for simultaneous oscillation in opposite directions on actuation of air cylinders (14a, 14b) articulated to arms (13a, 13b) attached transversely to the ends of said shafts (12).

3. An apparatus according to the preceding claims, characterized in that said oscillating clamping means for said cover plate (19) comprises a plurality of bushings (16) mounted slidably on said shafts (12) and having respectively a cross arm (17) carrying a pressure foot (18) articulated thereto.

4. An apparatus according to Claim 1, characterized in that said clamping means (16) for said side plates (27, 28) comprise on one side a pair of detents (29) which are adjustable longitudinally to said pivoting bench (2), and on the opposite side a plurality of air cylinders (25) mounted, at adjustable positions longitudinally to said pivoting bench (2), transversely to the axis of said pivoting bench (2).

5. An apparatus according to Claim 1, characterized in that said cover plate (19) has, on one face mating with said cylinder head, a plurality of seats (20) for sealing gaskets corresponding to said ports of the cylinder head cooling circuit and has throughgoing holes (21) for said test fluid delivery fittings (22a, 22b) and cylinder head locating pins formed therein.

6. An apparatus according to at least Claims 1 and 2, characterized in that said rims (3a, 3b) of said pivoting bench (2) are mounted on respective pairs of rollers (8) carried rotatably on a base of the apparatus and being adapted for simultaneous drive off a motor means.

**Patentansprüche**

1. Vorrichtung zur Dichtheitsprüfung des Kühlkreises von Zylinderköpfen (6) von Verbrennungsmotoren, umfassend ein um eine horizontale Achse schwenkbares Gestell (2) mit einer Einrichtung (5) zur Halterung eines zu prüfenden Zylinderkopfes (6), dadurch gekennzeichnet, daß diese Einrichtung an dem schwenkbaren Gestell (2) hin und her bewegbar gelagert und geeignet ist, eine Deckplatte (19) gegen den Zylinderkopf (6) zu spannen, welche obere Öffnungen des Zylinderkopfkühlkreises abdichtet, wobei diese Platte (19) mit Anschlüssen (22a, 22b) zum Hindurchleiten eines unter Druck stehenden Prüffluides durch den Kühlkreis versehen ist, und daß Mittel vorgesehen sind, um kleine Seitenplatten (27, 28) gegen den Zylinderkopf zu spannen, welche die Seitenöffnungen des Kühlkreises abdichten.

2. Vorrichtung nach Anspruch 1, dadurch gekennzeichnet, daß das schwenkbare Gestell (2) zwei koaxiale Reifen (3a, 3b) umfaßt, die innen jeweils einen Rahmen (4) tragen, zwischen denen unten parallele Holme (5) zur Halterung des Zylinderkopfes (6) befestigt sind und oben zwei Wellen (12) drehbar gelagert sind mit hin und her bewegbaren Einrichtungen (16) zum Andrücken der daran befestigten Deckplatte, wobei die Wellen (12) gleichzeitig in entgegengesetzter Richtung bei Betätigung von Druckluftzylindern drehbar sind, die mit quer an den Enden der Wellen (12) befestigten Armen gelenkig verbunden sind.

3. Vorrichtung nach einem der vorhergehenden Ansprüche, dadurch gekennzeichnet, daß die hin und der bewegbare Andruckeinrichtung für die Deckplatte (19) eine Vielzahl von Buchsen (16) umfaßt, die gleitend auf den Wellen (12) gelagert sind und jeweils einen Querarm (17) aufweisen, der einen an ihm angelankten Drückerfuß (18) trägt.

4. Vorrichtung nach Anspruch 1, dadurch gekennzeichnet, daß die Andruckeinrichtungen (16) für die Seitenplatten (17, 28) auf einer Seite zwei in Längsrichtung des schwenkbaren Gestells zwei verstellbare Anschläge (29) und auf der entgegengesetzten Seite eine Mehrzahl von Druckluftzylindern (25) umfaßt, die an in Längsrichtung des schwenkbaren Gestells (2) und quer zu dessen Achse einstellbaren Positionen angeordnet sind.

5. Vorrichtung nach Anspruch 1, dadurch gekennzeichnet, daß die Deckplatte (19) auf einer mit dem Zylinderkopf zusammenwirkenden Seite eine Vielzahl von Sitzen (20) für Dichtungen hat, die den Öffnungen des Zylinderkopfkühlkreises entsprechen, und durchgehende Bohrungen (21) für die Anschlüsse (22a, 22b) zum Zuführen des Prüffluides sowie darin ausgebildete Zylinderkopfpositionierungsstifte aufweist.

6. Vorrichtung nach mindestens Anspruch 1 und 2, dadurch gekennzeichnet, daß die Reifen (3a, 3b) des schwenkbaren Gestells (2) auf jeweils zwei Rollen (8) gelagert sind, die drehbar an einer Basis der Vorrichtung gelagert und gleichzeitig mittels eines Motors antreibbar sind.

**Revendications**

1. Appareil pour tester l'étanchéité du circuit de refroidissement de têtes de cylindre ou culasses (6) de moteurs à combustion interne, comprenant un banc (2) pivotant autour d'un axe horizontal incluant des moyens (5) pour maintenir une tête de cylindre (6) à tester, caractérisé en ce que des moyens sont montés pour osciller sur ledit banc pivotant (2) et adaptée pour fixer à ladite tête de cylindre (6) une plaque de recouvrement (19) assurant l'étanchéité d'orifices supérieurs du circuit de refroidissement de la tête de cylindre, ladite plaque (19) étant munie de raccords (22a, 22b) pour admettre un fluide de test sous pression à travers ledit circuit de refroidissement, et des moyens pour fixer à ladite tête de cylindre (6) de petites plaques de recouvrement latérales (27, 28) assurant l'étanchéité des orifices latéraux dans ledit circuit de refroidissement.

2. Appareil selon la revendication 1, caractérisé en ce que ledit banc pivotant (2) comprend une paire de jantes coaxiales (3a, 3b) portant intérieurement des cadres respectifs (4) entre lesquels sont fixés, en bas, des longerons parallèles (5) pour supporter ladite tête de cylindre (6), et une paire d'arbres (12) sont portés, de façon rotative, en haut, ayant des moyens oscillants (16) pour serrer ladite plaque de recouvrement qui y est montée, lesdits arbres (12) étant adaptée pour une oscillation simultanée dans des sens opposés en actionnant des cylindres pneumatiques (14a, 14b) articulés à des bras (13a, 13b) fixés transversalement aux extrémités desdits arbres (12).

3. Appareil selon les revendications précédentes, caractérisé en ce que lesdits moyens de serrage oscillants pour ladite plaque de recouvrement (19) comprennent une pluralité de bagues (16) montées coulissantes sur lesdits arbres (12) et ayant, respectivement, un bras transversal (17) portant un patin de pression (18) qui y est articulé.

4. Appareil selon la revendication 1, caractérisé en ce que lesdits moyens de serrage (16) pour lesdites plaques latérales (27, 28) comprennent, d'un côté, une paire d'ergots (29) qui sont réglables longitudinalement sur ledit banc pivotant (2) et, du côté opposé, une pluralité de cylindres pneumatiques (25) montés, dans des positions réglables longitudinalement sur ledit banc pivotant (2), transversalement à l'axe dudit banc pivotant (2).

5. Appareil selon la revendication 1, caractérisé en ce que ladite plaque de recouvrement (19) présente, sur une face s'adaptant à ladite tête de cylindre, une pluralité de sièges (20) pour des joints d'étanchéité correspondant auxdits orifices du circuit de refroidissement de la tête de cylindre et présente des trous traversants (21) pour lesdits raccords (22a, 22b) de distribution du fluide de test et des broches de positionnement de la tête de cylindre.

6. Appareil selon au moins les revendications 1 et 2, caractérisé en ce que lesdites jantes (3a, 3b) dudit banc pivotant (2) sont montées sur des paires respectives de galets (8) portés de façon rotative sur une base de l'appareil et adaptés pour un entraînement simultané par des moyens moteurs.

Fig. 1

Fig. 2

Fig. 3

Fig. 4